(19) Europäisches Patentamt
European Patent Office
Office européen des brevets

(11) **EP 3 752 859 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **18826554.0**

(22) Anmeldetag: **14.12.2018**

(51) Internationale Patentklassifikation (IPC):
**G01S 13/44** (2006.01)    **G01S 13/34** (2006.01)
**G01S 13/46** (2006.01)    **G01S 7/35** (2006.01)
**G01S 13/931** (2020.01)    **G01S 13/87** (2006.01)

(52) Gemeinsame Patentklassifikation (CPC):
**G01S 13/46; G01S 7/354; G01S 13/343;**
**G01S 13/4454; G01S 13/878; G01S 13/931;**
G01S 7/356; G01S 13/4445; G01S 2013/466

(86) Internationale Anmeldenummer:
**PCT/EP2018/084922**

(87) Internationale Veröffentlichungsnummer:
**WO 2019/158254 (22.08.2019 Gazette 2019/34)**

(54) **WINKELSCHÄTZUNG UND MEHRDEUTIGKEITSAUFLÖSUNG VON RADARSENSOREN FÜR KRAFTFAHRZEUGE MIT GROSSEM ANTENNENARRAY**

ANGLE ESTIMATION AND AMBIGUITY RESOLUTION OF RADAR SENSORS FOR MOTOR VEHICLES WITH A LARGE ANTENNA ARRAY

ESTIMATION ANGULAIRE ET RÉSOLUTION D'AMBIGUÏTÉ DE CAPTEURS RADAR POUR VÉHICULES AUTOMOBILES COMPRENANT UN GRAND RÉSEAU D'ANTENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2018 DE 102018202290**

(43) Veröffentlichungstag der Anmeldung:
**23.12.2020 Patentblatt 2020/52**

(73) Patentinhaber: **Robert Bosch GmbH**
**70442 Stuttgart (DE)**

(72) Erfinder: **SCHOOR, Michael**
**70195 Stuttgart (DE)**

(56) Entgegenhaltungen:
**US-A1- 2006 022 866    US-A1- 2017 176 583**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen winkelauflösenden Radarsensor für Kraftfahrzeuge, mit einer Antennenordnung mit mehreren zum Empfang eingerichteten Antennen, die in einer Richtung, in welcher der Radarsensor winkelauflösend ist, in verschiedenen Positionen angeordnet sind, und mit einer Steuer- und Auswerteeinrichtung, die für eine Betriebsweise ausgelegt ist, bei der wenigstens eine zum Senden eingerichtete Antenne des Radarsensors ein Signal sendet, das von mehreren der zum Empfangen eingerichteten Antennen des Radarsensors empfangen wird, wobei die Steuer- und Auswerteeinrichtung dazu ausgelegt ist, bei der genannten Betriebsweise eine Schätzung eines Winkels eines Radarziels auszuführen.

Stand der Technik

Radarsensoren werden in Kraftfahrzeugen beispielsweise zur Messung der Abstände, Relativgeschwindigkeiten und Azimutwinkel von im Vorfeld des eigenen Fahrzeugs georteten Fahrzeugen oder sonstigen Radarzielen eingesetzt. Mehrere Antennen sind dann beispielsweise in Abstand zueinander auf einer Horizontalen angeordnet, so dass unterschiedliche Azimutwinkel der georteten Radarziele zu Differenzen in den Lauflängen führen, die die Radarsignale vom Radarziel bis zur jeweiligen Antenne zurückzulegen haben. Diese Lauflängendifferenzen führen zu entsprechenden Unterschieden in der Amplitude und Phase der Signale, die von den Antennen empfangen und in den zugehörigen Auswertungskanälen ausgewertet werden. Für die Winkelschätzung nutzt man den Umstand aus, dass die Amplituden- und Phasenbeziehungen der von den verschiedenen Empfangsantennen erhaltenen Signale in charakteristischer Weise vom Winkel des Radarziels abhängig sind. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des Radarziels bestimmen. Auf entsprechende Weise lässt sich mit vertikal übereinander angeordneten Antennen auch der Elevationswinkel eines Radarziels schätzen.

Für ein einzelnes Ziel kann der Abgleich zwischen den empfangenen Amplituden und den Amplituden im Antennendiagramm erfolgen, indem man für jeden Winkel im Antennendiagramm eine Korrelation zwischen dem Vektor der gemessenen Amplituden (bei k Auswertungskanälen ist dies ein Vektor mit k komplexen Komponenten) und dem entsprechenden Vektor im Antennendiagramm berechnet. Diese Korrelation kann durch eine sogenannte DML-Funktion (Deterministic Maximum Likelihood Funktion) ausgedrückt werden, die, wenn ein bestimmter Vektor von gemessenen Amplituden gegeben ist, für jeden Winkel die Wahrscheinlichkeit dafür angibt, dass sich das Radarziel bei diesem Winkel befindet. Die Winkelschätzung besteht dann darin, dass man das Maximum dieser DML-Funktion aufsucht.

Damit eine hohe Winkelauflösung erreicht wird, sollte die Apertur der Antenne möglichst groß sein. Wenn jedoch die Abstände zwischen den benachbarten Antennen zu groß sind, können Mehrdeutigkeiten in der Winkelmessung auftreten, da man für Lauflängendifferenzen, die sich um ganzzahlige Vielfache der Wellenlänge $\lambda$ unterscheiden, dieselben Phasenbeziehungen zwischen den empfangenen Signalen erhält. Eine eindeutige Winkelmessung lässt sich beispielsweise mit einer ULA-Struktur (Uniform Linear Array) erreichen, bei der die Antennen in Abständen von $\lambda/2$ angeordnet sind. In diesem Fall nimmt jedoch mit zunehmender Apertur auch die Anzahl der Antennen und damit auch die Anzahl der erforderlichen Auswertungskanäle zu, so dass entsprechend hohe Hardwarekosten entstehen.

Eine Auflösung von Mehrdeutigkeiten kann auch mittels "Tracking" der Radarziele erfolgen, bei dem ein Radarziel über einen längeren Zeitraum verfolgt wird und eine Auswahl eines Winkelwerts der mehrdeutigen Schätzung unter Berücksichtigung bisheriger Schätzwinkel aus dem Verlauf der Ortungen erfolgt. Die Zuordnung erfordert jedoch bei einem neu auftauchenden Radarziel Zeit. Außerdem kann die Zuordnung insbesondere bei verrauschten Radarechos mit Fehlern behaftet sein, so dass es bei Mehrdeutigkeiten gelegentlich zu sprunghaften Änderungen des gemessenen Azimutwinkels kommt.

Bei einem MIMO-Radar (Multiple Input / Multiple Output) wird ein größeres Winkelauflösungsvermögen dadurch erreicht, dass man nicht nur mit mehreren empfangenden Antennen arbeitet, sondern auch mit mehreren sendenden Antennen, wobei unterschiedliche Kombinationen von sendenden und empfangenden Antennen ausgewertet werden, beispielsweise im Zeitmultiplex oder wahlweise auch im Frequenzmultiplex oder Codemultiplex. Die variierenden Positionen der sendenden Antennen führen dann zu zusätzlichen Phasendifferenzen und damit zu Signalen, die äquivalent sind zu Signalen, die man mit einer Konfiguration mit einer einzelnen sendenden Antenne und zusätzlichen (virtuellen) empfangenden Antennen erhalten würde. Auf diese Weise wird die Apertur virtuell vergrößert und damit die Winkelauflösung verbessert. Dies erfordert jedoch mehrere sendende Antennen, so dass damit auch die Anzahl der erforderlichen Auswertungskanäle zunimmt, so dass entsprechend hohe Hardwarekosten entstehen.

Im Hinblick auf eine möglichst hohe Winkelauflösung ist es bei einem MIMO-Radar vorteilhaft, wenn das virtuelle Antennenarray so ausgedünnt ist, dass die einzelnen Antennen relativ große Abstände zueinander haben. Unter diesen Umständen ist jedoch die Eindeutigkeitsbedingung nicht mehr erfüllt, so dass es insbesondere bei verrauschten Radarechos wiederum zu Mehrdeutigkeiten kommt.

US 2006/0022866 A1 beschreibt ein Radarsystem mit mehreren Empfangskanälen. Ein Verarbeitungssystem verwendet einen Algorithmus, z.B. einen Rückprojektionsalgorithmus, um die Art und den Ort von Hindernissen zu schätzen, die die elektromagnetische Welle reflektieren. In einem Beispiel wird ein Nahfeld-Fokussierungsalgorithmus verwendet, um ein 2D-Bild zu erzeugen und das Vorhandensein und den Ort eines Ziels zu detektieren.

US 2017/0176583 A1 beschreibt ein Radarsystem, bei dem Vergleichssignale aus Signalen erster und zweiter nicht-kohärenter Sende-Empfangseinheiten gebildet werden. In einem Beispiel wird ein Multilaterationsverfahren zur Bestimmung einer Objektposition verwendet.

Offenbarung der Erfindung

Im Zuge einer weiteren Steigerung der Leistungsfähigkeit der Radarsensoren werden d,v-Schätzungen mit gesteigerter Auflösung erfolgen können. Auch wird eine Zunahme der nutzbaren Sensorgröße, d.h. der Größe oder Apertur der Antennenanordnung, eine Steigerung der Genauigkeit der Winkelschätzung und eine verbesserte Winkeltrennung ermöglichen. Bei einem FMCW-(frequency modulated continuous wave)-Messverfahren mit linearen Frequenzrampen und einer Auswertung der Empfangssignale mittels diskreter Fourier-Transformation, insbesondere einer FFT (Fast Fourier Transformation), entspricht die Breite eines Entfernungsbins der Fourier-Transformation einem Entfernungsunterschied $\Delta r$ mit $\Delta r = c/(2F)$, wobei c die Lichtgeschwindigkeit ist und F der Frequenzhub einer linearen Frequenzrampe des FMCW-Sendesignals ist. Dieser Entfernungsunterschied wird hier auch als Entfernungsauflösung bezeichnet.

Unter der Entfernungsauflösung ist somit die kleinste Entfernungsdifferenz zu verstehen, bei der (bei gleicher Relativgeschwindigkeit) zwei Messwerte der Entfernung vom Radarsensor in der gegebenen Betriebsweise des Radarsensors noch auf getrennte Bins abgebildet werden können. Bei Durchführung einer FFT entspricht die Entfernungsauflösung dem Abstand zweier Entfernungsbins bei der FFT, i.e. der Breite eines Entfernungsbins. Hier und im folgenden werden die Begriffe Entfernungsauflösung und Breite des Entfernungsbins gleichbedeutend verwendet. Im Unterschied dazu wird unter der Entfernungstrennfähigkeit das doppelte der Breite des Entfernungsbins verstanden. Wird die Bandbreite eines Radarsensors gesteigert, ist beispielsweise bei einem Frequenzhub des Sendesignals von F = 2 GHz eine Entfernungsauflösung von $\Delta r$ = 7,5 cm möglich. Wird zugleich die Apertur oder, im Falle eines MIMO-(Multiple Input Multiple Output)-Radarsensors, die virtuelle Apertur gesteigert auf Werte ähnlicher Größenordnung, so können je nach Winkel eines Radarzieles die Lauflängenunterschiede zwischen Empfangssignalen einzelner Antennen oder Auswertungskanälen bereits so groß sein, dass in den FourierSpektren der Auswertungskanäle Information über die Amplitude und/oder Phase der empfangenen Signale je nach Auswertungskanal nicht nur in einem durch die d,v-Schätzung eines erfassten Radarzieles bestimmten Frequenzbin enthalten ist, sondern auch in einem oder mehreren benachbarten Frequenzbins.

Aufgabe der Erfindung ist es, einen Radarsensor zu schaffen, der eine neuartige Möglichkeit zur Auflösung von Mehrdeutigkeiten einer Winkelschätzung gestattet.

Diese Aufgabe wird erfindungsgemäß dadurch gelöst, dass die Steuer- und Auswerteeinrichtung dazu ausgelegt ist, bei der genannten Betriebsweise für eine einzelne Schätzung eines Winkels eines Radarziels für jeweilige Auswertungskanäle, die unterschiedlichen Konfigurationen von sendenden und empfangenden Antennen entsprechen, jeweilige individuelle Entfernungen des Radarziels zu bestimmen und die individuellen Entfernungen bei der Schätzung des Winkels des Radarziels zu verwenden, wobei ein Unterschied zwischen den individuellen Entfernungen, die in einzelnen Auswertungskanälen bestimmt werden, für die Auflösung von Mehrdeutigkeiten der Schätzung des Winkels des Radarziels verwendet wird.

Es werden individuelle Entfernungen für zwei oder mehr Auswertungskanäle bestimmt. Der Unterschied zwischen individuellen Entfernungen, die in den mindestens zwei einzelnen Auswertungskanälen bestimmt werden, wird für die Auflösung von Mehrdeutigkeiten einer Winkelschätzung verwendet.

Dadurch können beispielsweise andere Verfahrensweisen zur Auflösung von Mehrdeutigkeiten ersetzt oder unterstützt werden, indem zusätzliche Information bereitgestellt wird.

Für einen jeweiligen Auswertungskanal wird zweckmäßigerweise eine mittlere Entfernung der Signallaufwege von der sendenden Antenne zum Radarziel und vom Radarziel zur empfangenden Antenne als individuelle Entfernung angenommen oder bestimmt.

Die individuellen Entfernungen beziehen sich auf dieselbe Position des Objekts. Die Messungen für die einzelnen Auswertungskanäle können beispielsweise gleichzeitig (etwa wenn mehrere Empfangsantennen ein Signal einer Sendeantenne empfangen) oder zumindest in sehr geringem zeitlichen Abstand oder zeitlich verwoben ausgeführt werden, so dass im Rahmen der Messgenauigkeit von derselben Position ausgegangen werden kann.

Die Antennenanordnung ist vorzugsweise eine planare Anordnung der Antennen, etwa ein Antennenarray mit einem regelmäßigen Versatz zwischen den empfangenden Antennen, oder ein ausgedünntes Antennenarray.

Weiter wird die Aufgabe durch ein Verfahren zur Winkelschätzung von Radarzielen gelöst für einen Radarsensor für Kraftfahrzeuge mit einer Antennenordnung mit mehreren zum Empfang eingerichteten Antennen, die in einer Richtung, in welcher der Radarsensor winkelauflösend ist, in verschiedenen Positionen angeordnet sind, dadurch gekennzeichnet, dass für eine einzelne Schätzung eines Winkels eines Radarziels für jeweilige Auswertungskanäle, die unterschiedlichen Konfigurationen von sendenden und empfangenden Antennen entsprechen, jeweilige individuelle Entfernungen des Radarziels bestimmt werden und die individuellen Entfernungen bei der Schätzung des Winkels des Radarziels verwendet werden.

Vorteilhafte Ausgestaltungen und Weiterbildungen der Erfindung sind in den Unteransprüchen angegeben.

In einer zweckmäßigen Ausführungsform ist die Steuer- und Auswerteeinrichtung dazu ausgelegt, bei der genannten Betriebsweise die individuellen Entfernungen unter Berücksichtigung von Positionen betreffender Antennen bei der Schätzung des Winkels des Radarziels zu verwenden, insbesondere unter Berücksichtigung von Positionen in der genannten Richtung. Für einen jeweiligen Auswertungskanal wird zweckmäßigerweise eine mittlere Position zwischen den zum Senden und zum Empfangen verwendeten Antennen als Position berücksichtigt oder als bekannte Position angenommen.

In einer Ausführungsform ist die Steuer- und Auswerteeinrichtung dazu ausgelegt, bei der genannten Betriebsweise für eine einzelne Schätzung eines Winkels eines Radarziels eine Schätzung des Winkels anhand von erster Information und zweiter Information vorzunehmen, wobei die erste Information Amplituden- und/oder Phasenbeziehungen zwischen Signalen jeweiliger Auswertungskanäle sind, und wobei die zweite Information eine Eingrenzung eines Bereichs des Winkels ist, wobei die Steuer- und Auswerteeinrichtung dazu ausgelegt ist, bei der genannten Betriebsweise für eine einzelne Schätzung eines Winkels die zweite Information basierend auf den individuell bestimmten Entfernungen zu bestimmen. Die erste und die zweite Information können in beliebiger Reihenfolge und/oder gleichzeitig bestimmt werden.

In einer Ausführungsform ist die Steuer- und Auswerteeinrichtung dazu ausgelegt, bei der genannten Betriebsweise für eine einzelne Schätzung eines Winkels eines Radarziels eine erste Schätzung des Winkels anhand von Amplituden- und/oder Phasenbeziehungen zwischen Signalen jeweiliger Auswertungskanäle vorzunehmen und, wenn mehrere mögliche Winkelwerte als mehrdeutiges Ergebnis der ersten Schätzung des Winkels erhalten werden, basierend auf den individuell bestimmten Entfernungen einen der möglichen Winkelwerte als Ergebnis der Schätzung des Winkels auszuwählen. Mit anderen Worten wird in der genannten Betriebsweise basierend auf den individuell bestimmten Entfernungen eine Mehrdeutigkeit der Winkelschätzung aufgelöst. Es wird beispielsweise untersucht, welcher der mehrdeutigen Werte am besten zu den unterschiedlichen individuellen Entfernungen der Auswertungskanäle passt. Dabei können zwei oder mehr Auswertungskanäle verwendet werden. Die möglichen Winkelwerte können beispielsweise anhand der ersten Information bestimmt werden, und die Auflösung der Mehrdeutigkeit kann beispielsweise einer Bestimmung einer Eingrenzung des Bereichs des Winkels entsprechen (der zweiten Information).

In einer Ausführungsform ist die Steuer- und Auswerteeinrichtung dazu ausgelegt, bei der genannten Betriebsweise für eine einzelne Schätzung eines Winkels eines Radarziels eine Eingrenzung eines Bereichs des Winkels basierend auf den individuell bestimmten Entfernungen vorzunehmen und innerhalb des eingegrenzten Bereichs eine Schätzung des Winkels anhand von Amplituden- und/oder Phasenbeziehungen zwischen Signalen jeweiliger Auswertungskanäle vorzunehmen. So kann basierend auf der Bereichseingrenzung eine Mehrdeutigkeit der Winkelschätzung vermieden werden. Die Eingrenzung eines Bereichs des Winkels kann beispielsweise der zweiten Information entsprechen, wobei die Winkelschätzung basierend auf der ersten Information durchgeführt wird.

In einer Ausführungsform ist die Steuer- und Auswerteeinrichtung dazu ausgelegt, bei der genannten Betriebsweise zum Auswählen eines von möglichen, als mehrdeutiges Ergebnis einer ersten Schätzung des Winkels erhaltenen Winkelwerte eine zweite Schätzung des Winkels basierend auf den individuell bestimmten Entfernungen auszuführen und einen der möglichen Winkelwerte auf der Basis eines Vergleichs des Ergebnisses der zweiten Schätzung des Winkels mit den bei der ersten Schätzung erhaltenen möglichen Winkelwerten auszuwählen. Es wird somit untersucht, welcher der mehrdeutigen Werte am besten zu der zweiten Winkelschätzung anhand der unterschiedlichen individuellen Entfernungen der Auswertungskanäle passt. Die zweite Winkelschätzung kann beispielsweise gröber sein als die erste, oder kann eine näherungsweise Schätzung sein. Bei der Auswahl in Abhängigkeit von einem jeweiligen Vergleich der möglichen Winkelwerte mit einer näherungsweisen, zweiten Schätzung des Winkels kann der Vergleich zumindest die Auswahl unterstützen, wenn weitere Information zur Überprüfung der möglichen Winkelwerte und Auswahl anhand des Prüfungsergebnisses zur Verfügung steht.

In einer Ausführungsform ist die Steuer- und Auswerteeinrichtung dazu ausgelegt, bei der genannten Betriebsweise den Winkel durch Trilateration oder Multilateration basierend auf den individuell bestimmten Entfernungen zu schätzen. Dieser Ansatz zur Winkelschätzung ist besonders gut, wenn sich zwischen einzelnen Antennenkonfiguration der Auswertungskanäle ergebende Entfernungsunterschiede relativ groß sind, etwa bei einer Antennenanordnung mit besonders großer Apertur. Die Trilaterion oder Multilateration beruht darauf, dass aufgrund der Kenntnis der jeweiligen Entfernung eines Radarziels zu bekannten Positionen am Radarsensor zumindest näherungsweise auf die Position, und damit auf den Winkel des Radarziels, geschlossen werden kann.

In einer Ausführungsform ist die Steuer- und Auswerteeinrichtung dazu ausgelegt, bei der genannten zum Auswählen eines von möglichen, als mehrdeutiges Ergebnis einer ersten Schätzung des Winkels erhaltenen Winkelwerte ein Vorzeichen des Winkelwerts und/oder einen einer Geradeausrichtung entsprechenden Winkelwert auf Plausibilität zu prüfen hinsichtlich einer Tendenz einer Zuordnung der individuell bestimmten Entfernungen zu Positionen betreffender Antennen. Hierzu kann beispielsweise eine Fallunterscheidung genügen. Dabei werden vorzugsweise folgende Fälle unterschieden:

- unterschiedlichen Positionen betreffender Antennen sind im wesentlichen (z.B. im Rahmen eines Schwellwerts) gleiche individuelle Entfernungen zuzuordnen;
- größere individuelle Entfernungen sind tendenziell Positionen weiter links zugeordnet als kleinere individuelle Entfernungen;
- größere individuelle Entfernungen sind tendenziell Positionen weiter rechts zugeordnet als kleinere individuelle Entfernungen.

Als Antennenposition wird zweckmäßigerweise wiederum für einen jeweiligen Auswertungskanal eine mittlere Position zwischen den zum Senden und zum Empfangen verwendeten Antennen als Position berücksichtigt oder als bekannte Position angenommen.

Die für die Erfindung und die Ausführungsformen genannten Merkmale sind besonders vorteilhaft, wenn bei dem Radarsensor für wenigstens zwei Auswertungskanäle ein maximaler durch die Konfigurationen von sendenden und empfangenden Antennen erzeugter Entfernungsunterschied zu einem Radarziel wenigstens 40% der Entfernungsauflösung entspricht, oder insbesondere wenigstens 80% der Entfernungsauflösung entspricht. Vorzugsweise entspricht für wenigstens zwei Auswertungskanäle ein maximaler durch die Konfigurationen von sendenden und empfangenden Antennen erzeugter Entfernungsunterschied zu einem Radarziel wenigstens 20%, weiter vorzugsweise wenigstens 33% oder wenigstens 40% oder wenigstens 50% oder wenigstens 80% oder wenigstens 100% der Entfernungsauflösung. Der maximal durch die Konfigurationen von sendenden und empfangenden Antennen erzeugte Entfernungsunterschied kann beispielsweise bei Winkeln im Bereich bis 90° der (virtuellen) Apertur der Antennenanordnung entsprechen.

Im folgenden werden Ausführungsbeispiele anhand der Zeichnung näher erläutert. Es zeigen:

Fig. 1    ein Blockdiagramm eines erfindungsgemäßen Radarsensors;

Fig. 2    eine schematische Darstellung von Frequenzbins von Fourier-Spektren jeweiliger Auswertungskanäle; und

Fig. 3    eine Beziehung zwischen zwei Antennen und einem Radarziel.

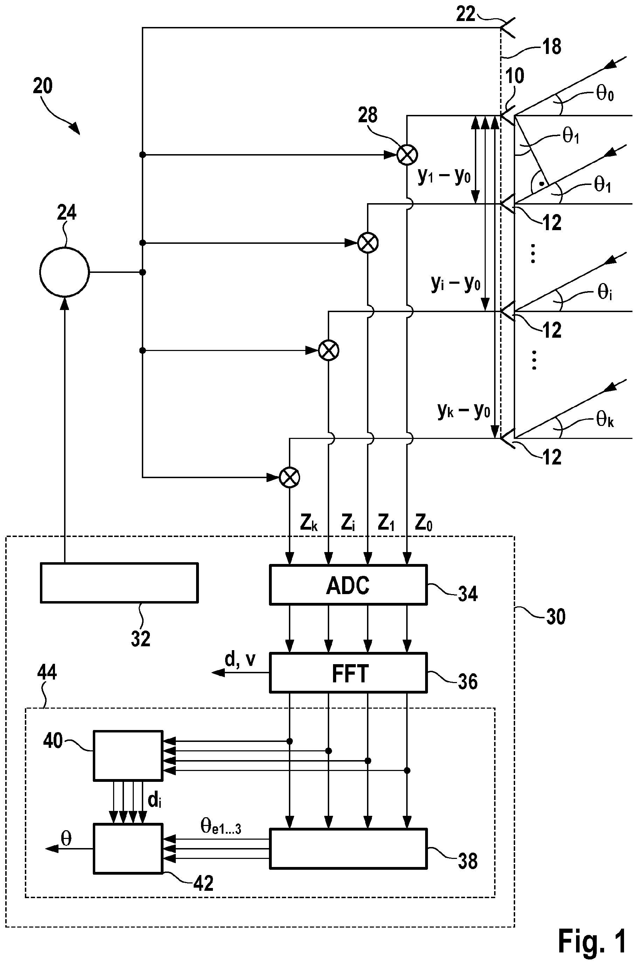

Der in Fig. 1 gezeigte Radarsensor weist mehrere empfangende Antennen oder Antennenelemente 10, 12 auf einem gemeinsamen Substrat 18 auf. Der Radarsensor wird so in ein Kraftfahrzeug eingebaut, dass mehrere der Antennen 10, 12 auf gleicher Höhe nebeneinander an horizontalen Positionen $y_i$ liegen, i=0,...,k, so dass ein Winkelauflösungsvermögen des Radarsensors in der Horizontalen (im Azimut) erreicht wird. In Fig. 1 sind symbolisch Radarstrahlen dargestellt, die von den Antennen unter einem jeweiligen Azimutwinkel $\theta_i$ empfangen werden.

Ein Hochfrequenzteil 20 zur Ansteuerung einer sendenden Antenne 22 umfasst einen lokalen Oszillator 24, der das zu sendende Radarsignal erzeugt. Die von den Antennen 10, 12 empfangenen Radarechos werden jeweils einem Mischer 28 zugeführt, wo sie mit dem vom Oszillator 24 gelieferten Sendesignal gemischt werden. Auf diese Weise erhält man für jedes der Antennen 10, 12 ein Basisbandsignal oder Zwischenfrequenzsignal $Z_0$, $Z_1$, ..., $Z_i$, ..., $Z_k$, das einer elektronischen Steuer- und Auswerteeinheit 30 zugeführt wird. Die Steuer- und Auswerteeinheit 30 enthält einen Steuerungsteil 32, der die Funktion des Oszillators 24 steuert. Im gezeigten Beispiel handelt es sich bei dem Radarsensor um ein FMCW-Radar, d.h., die Frequenz des vom Oszillator 24 gelieferten Sendesignals wird periodisch in Form einer Folge von steigenden und/oder fallenden Frequenzrampen moduliert.

Weiterhin enthält die Steuer- und Auswerteeinrichtung 30 einen Auswerteteil mit einem Analog/Digital-Wandler 34 mit k Kanälen, der die von den k Antennen 10, 12 erhaltenen Zwischenfrequenzsignale $Z_0$ - $Z_k$ digitalisiert und jeweils über die Dauer einer einzelnen Frequenzrampe aufzeichnet. Die so erhaltenen Zeitsignale werden dann kanalweise in einer Transformationsstufe 36 durch Schnelle Fouriertransformation in entsprechende Frequenzspektren umgewandelt. In diesen Frequenzspektren zeichnet sich jedes Radarziel in der Form eines Peaks ab, dessen Frequenzlage von der Signallaufzeit vom Radarsensor zum Radarziel und zurück zum Radarsensor sowie - aufgrund des Doppler-Effektes - von der Relativgeschwindigkeit des Radarziels abhängig ist. Aus den Frequenzlagen zweier Peaks, die für dasselbe Radarziel erhalten wurden, jedoch auf Frequenzrampen mit unterschiedlicher Steigung, beispielsweise einer steigenden Rampe und einer fallenden Rampe, lässt sich dann in bekannter Weise der Abstand d und die Relativgeschwindigkeit v des betreffenden Radarzieles berechnen.

Wie in Fig. 1 anhand der Radarstrahlen schematisch dargestellt wird, führen die unterschiedlichen Positionen der Antennen 10, 12 dazu, dass die Radarstrahlen, die von ein und derselben Antenne emittiert wurden, am Radarziel reflektiert wurden und dann von den verschiedenen Antennen empfangen werden, unterschiedliche Lauflängen zurücklegen und deshalb Phasenunterschiede aufweisen, die vom Azimutwinkel $\theta$ des Radarziels abhängig sind. Auch die zugehörigen Zwischenfrequenzsignale Z0 - Zk weisen entsprechende Phasenunterschiede auf. Auch die Amplituden (Beträge) der empfangenen Signale sind von Antenne zu Antenne unterschiedlich, ebenfalls abhängig vom Azimutwinkel $\theta$.

Ein Winkelschätzer 38 vergleicht für jedes geortete Objekt, d.h. jedes Radarziel (jeden Peak im Frequenzspektrum) die in den k Empfangskanälen erhaltenen komplexen Amplituden mit dem Antennendiagramm, um so den Azimutwinkel $\theta$ des Radarziels zu schätzen. Als Ergebnis kann beispielsweise ein mehrdeutiges Ergebnis mit mehreren möglichen Winkelwerten $\theta e1$, $\theta e2$, $\theta e3$ für den Azimutwinkel $\theta$ erhalten werden.

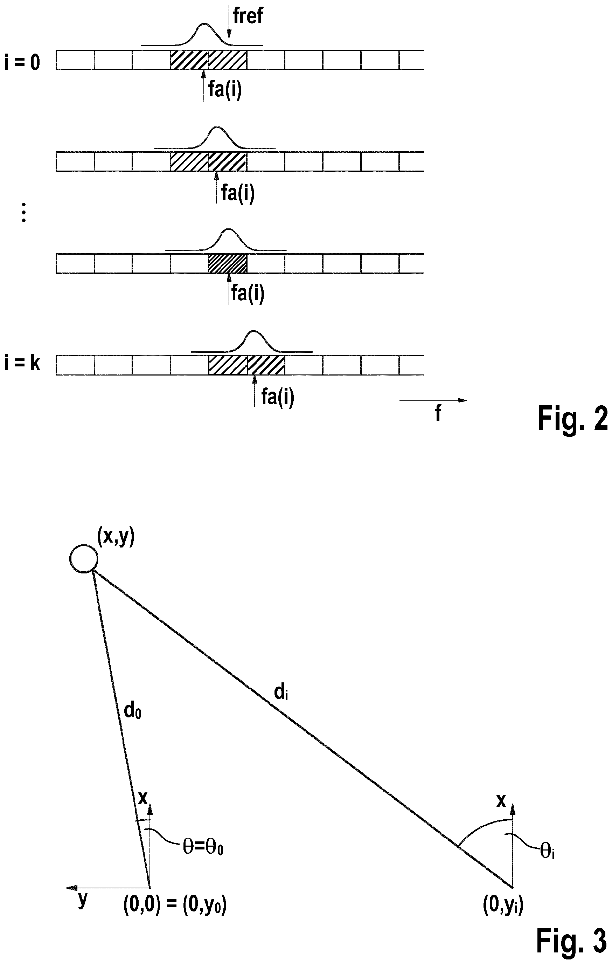

Bei einer hohen Bandbreite, entsprechend einem großen Frequenzhub der FMCW-Modulation, und einer großen Ausdehnung der Antennenanordnung sind jedoch je nach Azimutwinkel $\theta$ des Radarziels und je nach seinem Abstand d die komplexen Amplituden in den einzelnen Empfangskanälen an unterschiedlichen Frequenzlagen fa(i) im Frequenzspektrum des empfangenen Signals enthalten. Dies ist schematisch in Fig. 2 illustriert, wobei in der Richtung zunehmender Frequenz f aufeinanderfolgende Frequenzbins des FourierSpektrums dargestellt sind. Ein Peak im empfangenen Signal bei einer Frequenzlage fa wird bei der Fourier-Transformation je nach Auswertungskanal und Winkel auf mehr als einen Frequenzbin abgebildet, wie durch Schraffuren in Fig. 2 gekennzeichnet ist. Die Frequenz fref bezeichnet eine mittlere Frequenzposition, welche dem vom Winkelschätzung ausgewerteten Bin entspricht.

Wie schematisch in Fig. 2 mittels eines Peaks über dem jeweiligen Frequenzspektrum illustriert ist, wird die genauere Position (Frequenzlage) eines Peaks dann von einem Entfernungsschätzer 40 beispielsweise durch Interpolation des Spektrums an Stützstellen, die feiner aufgelöst sind als die Abstände der Frequenzbins, und Suche des Peak-Maximums, oder durch lokale Anpassung (Fitting) einer Peak-Funktion an das Spektrum bestimmt.

Wie in Fig. 1 gezeigt ist, erhält ein Entscheider 42 von dem Entfernungsschätzer für jeweilige Auswertungskanäle i den geschätzten individuellen Wert der Entfernung di, und von dem Winkelschätzer 38 das ggf. mehrdeutige Ergebnis der Winkelschätzung, d.h. die möglichen Winkelwerte $\theta e1$, $\theta e2$, $\theta e3$ des Azimutwinkels. Auf dieser Grundlage, und unter Berücksichtigung der Positionen yi der jeweiligen Antennen, wählt der Entscheider 42 denjenigen Winkelwert aus, der am besten zu den individuellen Entfernungen di passt. Dies wird nachfolgend näher erläutert.

Fig. 3 illustriert in der Draufsicht für zwei Antennen, bezeichnet mit den Indizes 0 und i an den Koordinaten (0,y0) und (0,yi), die Beziehung zu einem Punktziel als Radarziel an den Koordinaten (x,y). Die Abstände des Punktziels von den einzelnen Antennen sind mit d0, di bezeichnet, und die Einfallswinkel (Azimutwinkel) des empfangenen Radarsignals mit $\theta 0$ bzw. $\theta i$. Zur Vereinfachung der Darstellung wird angenommen, dass der Ursprung (0,0) den Mittelpunkt des Antennenarrays darstellt und einer mittleren Position der empfangenden Antennen 10, 12 entspricht, und es wird ein monostatisches System beschrieben.

Für jede Antenne mit dem Index i gilt:

$$d i = (x^2 + (y \text{-} yi)^2)^{1/2}$$

und

$$\theta i = atan\ ((y \text{-} yi)/x)$$

für die individuellen Positionen und Winkel des Radarziels.

Als Schätzgrößen des Radarsensors sollen die Koordinaten des Radarziels bezogen auf den Ursprung ermittelt werden, d.h.

$$d = (x^2 + y^2)^{1/2}$$

und

$$\theta = atan\ (y/x).$$

Je Antenne ist der Unterschied zu den mittleren Größen:

$$\Delta d i = d i - d = (x^2 + (y \text{-} yi)^2)^{1/2} - (x^2 + y^2)^{1/2}$$

und

$$\Delta\theta i = \theta i - \theta = \text{atan}\,((y-yi)/x) - \text{atan}\,(y/x),$$

wobei $\Delta di$ den Entfernungsunterschied und $\Delta\theta i$ den Azimutwinkelunterschied bezeichnen.

Für den Entfernungsunterschied gilt:

$$\Delta d_i = d_i - d = \sqrt{x^2 + (y - y_i)^2} - \sqrt{x^2 + y^2} = \sqrt{x^2 + y^2 - 2yy_i + y_i^2} - \sqrt{x^2 + y^2}$$

$$= \sqrt{x^2 + y^2}\sqrt{1 - \frac{2yy_i + y_i^2}{x^2 + y^2}} - \sqrt{x^2 + y^2} = \left(\sqrt{1 - \frac{y_i(2y + y_i)}{d^2}} - 1\right)d$$

$$= \left(\sqrt{1 + z} - 1\right)d = \left(\frac{1}{2}z - \frac{1}{8}z^2 + \frac{1}{16}z^3 - \frac{5}{128}z^4 + \cdots\right)d$$

$$z = \frac{y_i(2y + y_i)}{d^2}$$

mit der Taylorreihenentwicklung in der letzten Zeile für                    .

Näherungsweise ergibt sich für $|y| \gg |y_i|$ und großes d und somit kleines z:

$$z \approx -\frac{2yy_i}{d^2} = -\frac{2y_i}{d}\sin\theta$$

$$\Delta d_i \approx \frac{1}{2}zd \approx -y_i\sin\theta$$

Damit folgt:

Näherungsweise wird über diese einfach zu implementierende Beziehung für jeweilige Auswertungskanäle i der Azimutwinkel $\theta$ aus den Unterschieden $\Delta di$ der Entfernung und den betreffenden Antennenpositionen $yi$ geschätzt. Durch Vergleich mit den möglichen, genauer geschätzten Winkelwerten $\theta e1$, $\theta e2$, $\theta e3$ wird von dem Entscheider 42 der als zutreffend erkannte Winkelwert $\theta e$ als geschätzter Azimutwinkel $\theta$ bestimmt.

Die der aufgrund der Lauflängenunterschiede von dem Radarsensor "gesehenen" individuellen Entfernungen $di$ der Auswertungskanäle hängen von der Antennenkonfiguration ab. So werden in einem bistatischen System bzw. einem MIMO-System die Effekte (Entfernung bzw. Laufzeit) für den Weg von der Sendeantenne zum Ziel und vom Ziel zur Empfangsantenne addiert und gemittelt. Die geschätzte Entfernung $di$ wird beispielsweise bestimmt über die Gesamtlaufzeit des Signals, aufgeteilt in Hin- und Rückweg, und damit als mittlere Entfernung über die mittlere Laufzeit des Signals. Als Antennenposition $yi$ wird die mittlere Position der betreffenden Sende- und Empfangsantennen bestimmt. Bei einem MIMO-Radarsensor entsprechen k Auswertekanäle unterschiedlichen Konfigurationen von sendenden und empfangenden Antennen.

Im Beispiel bildet der Winkelschätzer 38 eine erste Stufe eines Winkelschätzers 44, der den Winkelschätzer 38, den Entfernungsschätzer 40 und den Entscheider 42 umfasst.

In einem anderen Beispiel ist der Entscheider 42 dazu eingerichtet, aus den individuellen Entfernungen $di$ und unter Berücksichtigung der Antennenpositionen $yi$ durch Trilateration oder Multilateration den Winkel $\theta$ näherungsweise zu schätzen, und durch Vergleich mit den möglichen, genauer geschätzten Winkelwerten $\theta e1$, $\theta e2$, $\theta e3$ den als zutreffend erkannten Winkelwert $\theta e$ als geschätzter Azimutwinkel $\theta$ zu bestimmen.

Der Entscheider 42 ist beispielsweise dazu eingerichtet, die möglichen Winkelwerte $\theta e1$, $\theta e2$, $\theta e3$ auf Plausibilität zu prüfen hinsichtlich einer Tendenz einer Zuordnung der individuell bestimmten Entfernungen $di$ zu der Positionen $yi$ betreffender Antennen. Sollen etwa die Winkel -30°, 0°, oder 30° als mehrdeutiges Ergebnis einer Winkelschätzung auf Plausibilität geprüft werden, so können die Fälle unterschieden werden: 1.) bei Antennenpositionen links und rechts einer mittleren Antennenposition werden im wesentlichen gleiche individuelle Entfernungen bestimmt; es wird der Winkel 0° als plausibel bestimmt; 2.) bei einer linken Antennenposition wird eine größere individuelle Entfernung bestimmt als bei einer rechten Antennenposition; es wird der (rechts von der Mitte liegende) Winkel -30° als plausibel bestimmt; und: 3.) bei einer linken Antennenposition wird eine kleinere individuelle Entfernung bestimmt als bei einer rechten Antennenposition; es wird der Winkel +30° als plausibel bestimmt.

In einem anderen Ausführungsbeispiel erfolgt die Winkelschätzung in entsprechender Weise, wobei aber zuerst anhand einer Tendenz einer Zuordnung der individuell bestimmten Entfernungen $di$ zu den Positionen $yi$ betreffender Antennen auf einen eingegrenzten Winkelbereich geschlossen wird, beispielsweise "linksseitig", "mittig mit einer Toleranzbreite", "rechtsseitig", und dann die Winkelschätzung innerhalb des eingegrenzten Winkelbereichs in eindeutiger Weise ausgeführt wird. Die Winkelbereiche können sich überlappen.

In einem anderen Ausführungsbeispiel erfolgt eine Winkelschätzung unmittelbar anhand der von dem Entfernungsschätzer 40 bestimmten individuellen Entfernungen, z.B. durch Trilateration oder Multilateration, ohne dass der Winkelschätzer 38 vorhanden ist oder verwendet wird.

In einem Ausführungsbeispiel ist die oben anhand von Beispielen beschriebene Betriebsweise der Steuer- und Auswerteeinrichtung 30 eine für einen Notbetrieb vorgesehene Betriebsweise. Im Normalbetrieb führt der Winkelschätzer 44 eine herkömmliche Winkelschätzung mittels des Winkelschätzers 38 durch und setzt ein herkömmliches Verfahren zur Auflösung von Mehrdeutigkeiten der Winkelschätzung ein. Bei einem Ausfall einer oder mehrerer Antennen schaltet die Steuer- und Auswerteeinrichtung 30 auf einen Notbetrieb mit den verbleibenden Antennen um, bei dem die oben beschriebene Betriebsweise zur Winkelschätzung bzw. zur Auflösung von Mehrdeutigkeiten eingesetzt wird.

Bei den Antennen 10, 12 und 22 kann es sich um Gruppenantennen handeln, die jeweils ein Array von Patches umfassen, die gleichphasig angesteuert werden bzw. unter Erhalt der Phasen zu einem Empfangssignal zusammengefasst werden.

Bei den hier beschriebenen Ausführungsbeispielen wird mit einem bistatischen Antennenkonzept gearbeitet. Wahlweise könnte jedoch auch eine monostatisches Antennenkonzept benutzt werden, bei dem dieselben (Gruppen-) Antennen zum Senden und zum Empfang genutzt werden.

Die beschriebene Betriebsweise der Steuer- und Auswerteeinrichtung kann vorteilhaft insbesondere bei FMCW-Radarsensoren eingesetzt werden, die mit sogenannten Rapid-Chirp-Sequenzen arbeiten. Dabei wird in rascher Folge eine Vielzahl von Frequenzrampen (Chirps) durchfahren, die eine große Steigung und nur eine relativ geringe Dauer haben.

## Patentansprüche

1. Winkelauflösender Radarsensor für Kraftfahrzeuge, mit einer Antennenordnung mit mehreren zum Empfang eingerichteten Antennen (10, 12), die in einer Richtung (y), in welcher der Radarsensor winkelauflösend ist, in verschiedenen Positionen (yi) angeordnet sind, und mit einer Steuer- und Auswerteeinrichtung (30), die für eine Betriebsweise ausgelegt ist, bei der wenigstens eine zum Senden eingerichtete Antenne (22) des Radarsensors ein Signal sendet, das von mehreren der zum Empfangen eingerichteten Antennen (10, 12) des Radarsensors empfangen wird, wobei die Steuer- und Auswerteeinrichtung (30) dazu ausgelegt ist, bei der genannten Betriebsweise eine Schätzung eines Winkels (θ) eines Radarziels auszuführen,
   **dadurch gekennzeichnet, dass** die Steuer- und Auswerteeinrichtung (30) dazu ausgelegt ist, bei der genannten Betriebsweise für eine einzelne Schätzung eines Winkels (θ) eines Radarziels für jeweilige Auswertungskanäle (i), die unterschiedlichen Konfigurationen von sendenden und empfangenden Antennen (22, 10, 12) entsprechen, jeweilige individuelle Entfernungen (di) des Radarziels zu bestimmen und die individuellen Entfernungen (di) bei der Schätzung des Winkels (θ) des Radarziels zu verwenden, wobei ein Unterschied zwischen den individuellen Entfernungen (di), die in mindestens zwei einzelnen Auswertungskanälen (i) bestimmt werden, für die Auflösung von Mehrdeutigkeiten der Schätzung des Winkels (θ) des Radarziels verwendet wird.

2. Radarsensor nach Anspruch 1, bei dem die Steuer- und Auswerteeinrichtung (30) dazu ausgelegt ist, bei der genannten Betriebsweise die individuellen Entfernungen (di) unter Berücksichtigung von Positionen (yi) betreffender Antennen bei der Schätzung des Winkels (θ) des Radarziels zu verwenden.

3. Radarsensor nach Anspruch 1 oder 2, bei dem die Steuer- und Auswerteeinrichtung (30) dazu ausgelegt ist, bei der genannten Betriebsweise für eine einzelne Schätzung eines Winkels (θ) eines Radarziels eine erste Schätzung des Winkels anhand von Amplituden- und/oder Phasenbeziehungen zwischen Signalen jeweiliger Auswertungskanäle (i) vorzunehmen und, wenn mehrere mögliche Winkelwerte (θe1, θe2, θe3) als mehrdeutiges Ergebnis der ersten Schätzung des Winkels erhalten werden, basierend auf den individuell bestimmten Entfernungen (di) einen der möglichen Winkelwerte als Ergebnis der Schätzung des Winkels (θ) auszuwählen.

4. Radarsensor nach Anspruch 1 oder 2, bei dem die Steuer- und Auswerteeinrichtung (30) dazu ausgelegt ist, bei der genannten Betriebsweise für eine einzelne Schätzung eines Winkels (θ) eine Eingrenzung eines Bereichs des Winkels basierend auf den individuell bestimmten Entfernungen (di) vorzunehmen und innerhalb des eingegrenzten Bereichs eine Schätzung des Winkels anhand von Amplituden- und/oder Phasenbeziehungen zwischen Signalen jeweiliger Auswertungskanäle (i) vorzunehmen.

5. Radarsensor nach einem der vorstehenden Ansprüche, bei dem die Steuer- und Auswerteeinrichtung (30) dazu ausgelegt ist, bei der genannten Betriebsweise zum Auswählen eines von möglichen, als mehrdeutiges Ergebnis einer ersten Schätzung des Winkels erhaltenen Winkelwerte ($\theta$e1, $\theta$e2, $\theta$e3) als die einzelne Schätzung des Winkels ($\theta$) eine zweite Schätzung des Winkels ($\theta$) basierend auf den individuell bestimmten Entfernungen (di) auszuführen und einen der möglichen Winkelwerte auf der Basis eines Vergleichs des Ergebnisses der zweiten Schätzung des Winkels mit den bei der ersten Schätzung erhaltenen möglichen Winkelwerten als die einzelne Schätzung des Winkels ($\theta$) auszuwählen.

6.  Radarsensor nach einem der vorstehenden Ansprüche, bei dem die Steuer- und Auswerteeinrichtung (30) dazu ausgelegt ist, bei der genannten Betriebsweise zum Auswählen eines von möglichen, als mehrdeutiges Ergebnis einer ersten Schätzung des Winkels erhaltenen Winkelwerte ($\theta$e1, $\theta$e2, $\theta$e3) als die einzelne Schätzung des Winkels ($\theta$) eine zweite Schätzung des Winkels durch Trilateration oder Multilateration basierend auf den individuell bestimmten Entfernungen (di) auszuführen, und einen der möglichen Winkelwerte auf der Basis eines Vergleichs des Ergebnisses der zweiten Schätzung des Winkels mit den bei der ersten Schätzung erhaltenen möglichen Winkelwerten als die einzelne Schätzung des Winkels ($\theta$) auszuwählen.

7.  Radarsensor nach einem der vorstehenden Ansprüche, bei dem die Steuer- und Auswerteeinrichtung (30) dazu ausgelegt ist, bei der genannten Betriebsweise zum Auswählen eines von möglichen, als mehrdeutiges Ergebnis einer ersten Schätzung des Winkels erhaltenen Winkelwerte ($\theta$e1, $\theta$e2, $\theta$e3) als die einzelne Schätzung des Winkels ($\theta$) eine zweite Schätzung des Winkels basierend auf der Beziehung $\sin\theta = -\Delta di / yi$ auszuführen, wobei $\theta$ den in der zweiten Schätzung zu schätzenden Winkel bezeichnet, i einen Auswertungskanal bezeichnet, $\Delta di$ einen Unterschied zwischen einer individuell bestimmten Entfernung für den Auswertungskanal i und einer Entfernung einer Referenzantennenposition bezeichnet, und yi eine Antennenposition für den Auswertungskanal i bezogen auf die Referenzantennenposition bezeichnet; und einen der möglichen Winkelwerte auf der Basis eines Vergleichs des Ergebnisses der zweiten Schätzung des Winkels mit den bei der ersten Schätzung erhaltenen möglichen Winkelwerten als die einzelne Schätzung des Winkels ($\theta$) auszuwählen.

8.  Radarsensor nach einem der vorstehenden Ansprüche, bei dem die Steuer- und Auswerteeinrichtung (30) dazu ausgelegt ist, bei der genannten Betriebsweise zum Auswählen eines von möglichen, als mehrdeutiges Ergebnis einer ersten Schätzung des Winkels erhaltenen Winkelwerte ($\theta$e1, $\theta$e2, $\theta$e3) ein Vorzeichen des Winkelwerts und/oder einen einer Geradeausrichtung entsprechenden Winkelwert auf Plausibilität zu prüfen hinsichtlich einer Tendenz einer Zuordnung der individuell bestimmten Entfernungen (di) zu Positionen (yi) betreffender Antennen.

9.  Radarsensor nach einem der vorstehenden Ansprüche, bei dem die genannte Betriebsweise eine zweite Betriebsweise ist, und bei dem die Steuer- und Auswerteeinrichtung (30) dazu ausgelegt ist, in einer ersten Betriebsweise den Winkel ($\theta$) eines Radarziels anhand von Amplituden- und/oder Phasenbeziehungen zwischen Signalen jeweiliger Auswertungskanäle (i) zu schätzen, die unterschiedlichen Konfigurationen von sendenden und empfangenden Antennen entsprechen, wobei Amplituden- und/oder Phasenbeziehungen zwischen Signalen an jeweils einer gleichen Frequenzlage in den verwendeten Auswertungskanälen (i) ausgewertet werden, und wobei die Steuer- und Auswerteeinrichtung (30) dazu ausgelegt ist, bei einem Ausfall einer oder mehrerer von in der ersten Betriebsweise zum Senden und/oder zum Empfangen verwendeten Antennen in der zweiten Betriebsweise unter Verwendung wenigstens einer übrigen, zum Senden verwendeten Antenne (22) und mehrerer übriger, zum Empfangen verwendeter Antennen (10, 12) die Schätzung eines Winkels ($\theta$) eines Radarziels auszuführen.

10. Verfahren zur Winkelschätzung von Radarzielen für einen Radarsensor für Kraftfahrzeuge mit einer Antennenordnung mit mehreren zum Empfang eingerichteten Antennen (10, 12), die in einer Richtung (y), in welcher der Radarsensor winkelauflösend ist, in verschiedenen Positionen (yi) angeordnet sind, und mit einer Steuer- und Auswerteeinrichtung (30), die für eine Betriebsweise ausgelegt ist, bei der wenigstens eine zum Senden eingerichtete Antenne (22) des Radarsensors ein Signal sendet, das von mehreren der zum Empfangen eingerichteten Antennen (10, 12) des Radarsensors empfangen wird, wobei die Steuer- und Auswerteeinrichtung (30) dazu ausgelegt ist, bei der genannten Betriebsweise eine Schätzung eines Winkels ($\theta$) eines Radarziels auszuführen, **dadurch gekennzeichnet, dass** die Steuer- und Auswerteeinrichtung (30) dazu ausgelegt ist, bei der genannten Betriebsweise für eine einzelne Schätzung eines Winkels ($\theta$) eines Radarziels für jeweilige Auswertungskanäle (i), die unterschiedlichen Konfigurationen von sendenden und empfangenden Antennen (22,10, 12) entsprechen, jeweilige individuelle Entfernungen des Radarziels bestimmt werden und die individuellen Entfernungen (di) bei der Schätzung des Winkels ($\theta$) des Radarziels verwendet werden, wobei ein Unterschied zwischen den individuellen Entfernungen (di), die in mindestens zwei einzelnen Auswertungskanälen (i) bestimmt werden, für die Auflösung von Mehrdeutigkeiten der Schätzung des Winkels ($\theta$) des Radarziels verwendet wird.

**Claims**

1. Angle-resolving radar sensor for motor vehicles, having an antenna arrangement containing multiple antennas (10, 12) that are configured to receive and are arranged in different positions (yi) in a direction (y) in which the radar sensor is angle-resolving, and having a control and evaluation device (30) that is designed for a mode of operation in which at least one antenna (22) of the radar sensor that is configured to transmit transmits a signal that is received by multiple instances of the antennas (10, 12) of the radar sensor that are configured to receive, the control and evaluation device (30) being designed to estimate an angle (Θ) of a radar target in said mode of operation, **characterized in that** the control and evaluation device (30) is designed so as, in said mode of operation, for a single estimation of an angle (Θ) of a radar target, to determine respective individual distances (di) of the radar target for respective evaluation channels (i) that correspond to different configurations of transmitting and receiving antennas (22, 10, 12) and to use the individual distances (di) to estimate the angle (Θ) of the radar target, a difference between the individual distances (di) determined in at least two single evaluation channels (i) being used to resolve ambiguities in the estimation of the angle (Θ) of the radar target.

2. Radar sensor according to Claim 1, in which the control and evaluation device (30) is designed so as, in said mode of operation, to use the individual distances (di) to estimate the angle (Θ) of the radar target by taking into account positions (yi) of relevant antennas.

3. Radar sensor according to Claim 1 or 2, in which the control and evaluation device (30) is designed so as, in said mode of operation, for a single estimation of an angle (Θ) of a radar target, to perform a first estimation of the angle on the basis of amplitude and/or phase relationships between signals of respective evaluation channels (i) and, if multiple possible angle values (Θe1, Θe2, Θe3) are obtained as the ambiguous result of the first estimation of the angle, to take the individually determined distances (di) as a basis for selecting one of the possible angle values as the result of the estimation of the angle (Θ).

4. Radar sensor according to Claim 1 or 2, in which the control and evaluation device (30) is designed so as, in said mode of operation, for a single estimation of an angle (Θ), to narrow down a range of the angle on the basis of the individually determined distances (di) and to estimate the angle within the narrowed-down range on the basis of amplitude and/or phase relationships between signals of respective evaluation channels (i).

5. Radar sensor according to one of the preceding claims, in which the control and evaluation device (30) is designed so as, in said mode of operation, to select one of possible angle values (Θe1, Θe2, Θe3) obtained as the ambiguous result of a first estimation of the angle as the single estimation of the angle (Θ) by carrying out a second estimation of the angle (Θ) on the basis of the individually determined distances (di) and selecting one of the possible angle values on the basis of a comparison of the result of the second estimation of the angle with the possible angle values obtained in the first estimation as the single estimation of the angle (Θ).

6. Radar sensor according to one of the preceding claims, in which the control and evaluation device (30) is designed so as, in said mode of operation, to select one of possible angle values (Θe1, Θe2, Θe3) obtained as the ambiguous result of a first estimation of the angle as the single estimation of the angle (Θ) by carrying out a second estimation of the angle by way of trilateration or multilateration on the basis of the individually determined distances (di), and selecting one of the possible angle values on the basis of a comparison of the result of the second estimation of the angle with the possible angle values obtained in the first estimation as the single estimation of the angle (Θ).

7. Radar sensor according to one of the preceding claims, in which the control and evaluation device (30) is designed so as, in said mode of operation, to select one of possible angle values (Θe1, Θe2, Θe3) obtained as the ambiguous result of a first estimation of the angle as the single estimation of the angle (Θ) by carrying out a second estimation of the angle on the basis of the relationship $\sin \Theta = -\Delta di / yi$, where Θ denotes the angle to be estimated in the second estimation, i denotes an evaluation channel, Δdi denotes a difference between an individually determined distance for the evaluation channel i and a distance of a reference antenna position, and yi denotes an antenna position for the evaluation channel i based on the reference antenna position; and selecting one of the possible angle values on the basis of a comparison of the result of the second estimation of the angle with the possible angle values obtained in the first estimation as the single estimation of the angle (Θ).

8. Radar sensor according to one of the preceding claims, in which the control and evaluation device (30) is designed so as, in said mode of operation, to select one of possible angle values (Θe1, Θe2, Θe3) obtained as the ambiguous result of a first estimation of the angle by checking an arithmetic sign of the angle value and/or an angle value corresponding to a straight-ahead direction for plausibility with regard to a tendency to associate the individually determined distances (di) with positions (yi) of relevant antennas.

**9.** Radar sensor according to one of the preceding claims, in which said mode of operation is a second mode of operation, and in which the control and evaluation device (30) is designed so as, in a first mode of operation, to estimate the angle (Θ) of a radar target on the basis of amplitude and/or phase relationships between signals of respective evaluation channels (i) that correspond to different configurations of transmitting and receiving antennas, wherein amplitudes and/or phase relationships between signals at the same respective frequency in the evaluation channels (i) used are evaluated, and wherein the control and evaluation device (30) is designed so as, in the event of a failure in one or more antennas used for transmitting and/or for receiving in the first mode of operation, to estimate an angle (Θ) of a radar target in the second mode of operation by using at least one other antenna (22) used for transmitting and multiple other antennas (10, 12) used for receiving.

**10.** Method for estimating the angle of radar targets for a radar sensor for motor vehicles having an antenna arrangement containing multiple antennas (10, 12) that are configured to receive and are arranged in different positions (yi) in a direction (y) in which the radar sensor is angle-resolving, and having a control and evaluation device (30) that is designed for a mode of operation in which at least one antenna (22) of the radar sensor that is configured to transmit transmits a signal that is received by multiple instances of the antennas (10, 12) of the radar sensor that are configured to receive, the control and evaluation device (30) being designed to estimate an angle (Θ) of a radar target in said mode of operation,
**characterized in that** the control and evaluation device (30) is designed so as, in said mode of operation, for a single estimation of an angle (Θ) of a radar target, to determine respective individual distances of the radar target for respective evaluation channels (i) that correspond to different configurations of transmitting and receiving antennas (22, 10, 12) and to use the individual distances (di) to estimate the angle (Θ) of the radar target, a difference between the individual distances (di) determined in at least two single evaluation channels (i) being used to resolve ambiguities in the estimation of the angle (Θ) of the radar target.

**Revendications**

**1.** Capteur radar à résolution angulaire pour véhicules automobiles, comprenant un arrangement d'antennes pourvu de plusieurs antennes (10, 12) configurées pour la réception, qui sont disposées à différentes positions (yi) dans une direction (y) dans laquelle le capteur radar est à résolution angulaire, et comprenant un dispositif de commande et d'interprétation (30), qui est conçu pour un mode de fonctionnement lors duquel au moins une antenne (22) du capteur radar configurée pour l'émission émet un signal, lequel est reçu par plusieurs des antennes (10, 12) du capteur radar configurées pour la réception, le dispositif de commande et d'interprétation (30) étant conçu pour, lors dudit mode de fonctionnement, effectuer une estimation d'un angle (θ) d'une cible radar,
**caractérisé en ce que** le dispositif de commande et d'interprétation (30) est conçu pour, lors dudit mode de fonctionnement, pour une estimation unique d'un angle (θ) d'une cible radar, pour des canaux d'interprétation (i) respectifs qui correspondent à différentes configurations d'antennes (22, 10, 12) émettrices et réceptrices, déterminer les distances individuelles (di) respectives de la cible radar et utiliser les distances individuelles (di) lors de l'estimation de l'angle (θ) de la cible radar, une différence entre les distances individuelles (di) qui sont déterminées dans au moins deux canaux d'interprétation (i) distincts étant utilisée pour la résolution d'ambiguïtés de l'estimation de l'angle (θ) de la cible radar.

**2.** Capteur radar selon la revendication 1, avec lequel le dispositif de commande et d'interprétation (30) est conçu pour, lors dudit mode de fonctionnement, utiliser les distances individuelles (di) en tenant compte des positions (yi) des antennes concernées lors de l'estimation de l'angle (θ) de la cible radar.

**3.** Capteur radar selon la revendication 1 ou 2, avec lequel le dispositif de commande et d'interprétation (30) est conçu pour, lors dudit mode de fonctionnement, pour une estimation unique d'un angle (θ) d'une cible radar, procéder à une première estimation de l'angle à l'aide de relations d'amplitudes et/ou de phases entre les signaux des canaux d'interprétation (i) respectifs et, lorsque plusieurs valeurs d'angle (θe1, θe2, θe3) possibles sont obtenues en tant que résultat ambigu de la première estimation de l'angle, sélectionner l'une des valeurs d'angle possibles en tant que résultat de l'estimation de l'angle (θ) en se basant sur les distances (di) déterminées individuellement.

**4.** Capteur radar selon la revendication 1 ou 2, avec lequel le dispositif de commande et d'interprétation (30) est conçu pour, lors dudit mode de fonctionnement, pour une estimation unique d'un angle (θ), procéder à une délimitation d'une plage de l'angle en se basant sur les distances (di) déterminées individuellement et, à l'intérieur de la plage délimitée, procéder à une estimation de l'angle à l'aide de relations d'amplitudes et/ou de phases entre les signaux des canaux d'interprétation (i) respectifs.

5. Capteur radar selon l'une des revendications précédentes, avec lequel le dispositif de commande et d'interprétation (30) est conçu pour, lors dudit mode de fonctionnement, en vue de sélectionner l'une des valeurs d'angle (θe1, θe2, θe3) possibles obtenues en tant que résultat ambigu d'une première estimation de l'angle comme l'unique estimation de l'angle (θ), effectuer une deuxième estimation de l'angle (θ) en se basant sur les distances (di) déterminées individuellement et sélectionner l'une des valeurs d'angle possibles en tant que l'unique estimation de l'angle (θ) sur la base d'une comparaison du résultat de la deuxième estimation de l'angle avec les valeurs d'angle possibles obtenues lors de la première estimation.

6. Capteur radar selon l'une des revendications précédentes, avec lequel le dispositif de commande et d'interprétation (30) est conçu pour, lors dudit mode de fonctionnement, en vue de sélectionner l'une des valeurs d'angle (θe1, θe2, θe3) possibles obtenues en tant que résultat ambigu d'une première estimation de l'angle comme l'unique estimation de l'angle (θ), effectuer une deuxième estimation de l'angle par trilatération ou multilatération en se basant sur les distances (di) déterminées individuellement et sélectionner l'une des valeurs d'angle possibles en tant que l'unique estimation de l'angle (θ) sur la base d'une comparaison du résultat de la deuxième estimation de l'angle avec les valeurs d'angle possibles obtenues lors de la première estimation.

7. Capteur radar selon l'une des revendications précédentes, avec lequel le dispositif de commande et d'interprétation (30) est conçu pour, lors dudit mode de fonctionnement, en vue de sélectionner l'une des valeurs d'angle (θe1, θe2, θe3) possibles obtenues en tant que résultat ambigu d'une première estimation de l'angle comme l'unique estimation de l'angle (θ), effectuer une deuxième estimation de l'angle en se basant sur la relation $\sin\theta = -\Box di/yi$, θ désignant l'angle à estimer dans la deuxième estimation, i désignant un canal d'interprétation, $\Box di$ désignant une différence entre une distance déterminée individuellement pour le canal d'interprétation i et une distance d'une position d'antenne de référence, et yi désignant une position d'antenne pour le canal d'interprétation i rapportée à la position d'antenne de référence ; et sélectionner l'une des valeurs d'angle possibles en tant que l'unique estimation de l'angle (θ) sur la base d'une comparaison du résultat de la deuxième estimation de l'angle avec les valeurs d'angle possibles obtenues lors de la première estimation.

8. Capteur radar selon l'une des revendications précédentes, avec lequel le dispositif de commande et d'interprétation (30) est conçu pour, lors dudit mode de fonctionnement, en vue de sélectionner l'une des valeurs d'angle (θe1, θe2, θe3) possibles obtenues en tant que résultat ambigu d'une première estimation de l'angle, vérifier la plausibilité d'un signe de la valeur d'angle et/ou d'une valeur d'angle correspondant à une orientation en ligne droite pour ce qui concerne une tendance d'une affectation des distances (di) déterminées individuellement à des positions (yi) des antennes concernées.

9. Capteur radar selon l'une des revendications précédentes, avec lequel le mode de fonctionnement mentionné est un deuxième mode de fonctionnement, et avec lequel le dispositif de commande et d'interprétation (30) est conçu pour, dans un premier mode de fonctionnement, estimer l'angle (θ) d'une cible radar à l'aide de relations d'amplitudes et/ou de phases entre les signaux des canaux d'interprétation (i) respectifs qui correspondent à différentes configurations d'antennes émettrices et réceptrices, les relations d'amplitudes et/ou de phases entre les signaux étant respectivement interprétées à une même position de fréquence dans les canaux d'interprétation (i) utilisés, et le dispositif de commande et d'interprétation (30) étant conçu pour, dans le cas d'une panne d'une ou plusieurs antennes utilisées pour l'émission et/ou la réception dans le premier mode de fonctionnement, effectuer l'estimation d'un angle (θ) d'une cible radar dans le deuxième mode de fonctionnement en utilisant au moins une autre antenne (22) utilisée pour l'émission et plusieurs autres antennes (10, 12) utilisées pour la réception.

10. Procédé d'estimation de l'angle de cibles radar pour un capteur radar pour véhicules automobiles, comprenant un arrangement d'antennes pourvu de plusieurs antennes (10, 12) configurées pour la réception, qui sont disposées à différentes positions (yi) dans une direction (y) dans laquelle le capteur radar est à résolution angulaire, et comprenant un dispositif de commande et d'interprétation (30), qui est conçu pour un mode de fonctionnement lors duquel au moins une antenne (22) du capteur radar configurée pour l'émission émet un signal, lequel est reçu par plusieurs des antennes (10, 12) du capteur radar configurées pour la réception, le dispositif de commande et d'interprétation (30) étant conçu pour, lors dudit mode de fonctionnement, effectuer une estimation d'un angle (θ) d'une cible radar, **caractérisé en ce que** le dispositif de commande et d'interprétation (30) est conçu pour, lors dudit mode de fonctionnement, pour une estimation unique d'un angle (θ) d'une cible radar, pour des canaux d'interprétation (i) respectifs qui correspondent à différentes configurations d'antennes (22, 10, 12) émettrices et réceptrices, déterminer les distances individuelles (di) respectives de la cible radar et utiliser les distances individuelles (di) lors de l'estimation de l'angle ($\theta$) de la cible radar, une différence entre les distances individuelles (di) qui sont déterminées dans au moins deux canaux d'interprétation (i) distincts étant utilisée pour la résolution d'ambiguïtés de l'estimation de l'angle ($\theta$) de la cible radar.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060022866 A1
- US 20170176583 A1